# EUROPÄISCHE PATENTSCHRIFT

(11) **EP 1 416 176 B1**
(45) Veröffentlichungstag und Bekanntmachung des Hinweises auf die Patenterteilung: **19.09.2007**
(21) Anmeldenummer: 03021593.3
(22) Anmeldetag: 25.09.2003
(51) Int. Cl.: F16C 13/02, B21B 31/04, D21G 1/02

(54) **Walzenanordnung mit schwenkbarem Zuganker**
Roll arrangement with pivoting tie-rod
Arrangement de rouleaux avec tirant d'ancrage pivotant

(30) Priorität: 26.10.2002 DE 10249948
(43) Veröffentlichungstag der Anmeldung: 06.05.2004
(73) Patentinhaber: Voith Patent GmbH, 89522 Heidenheim (DE)
(72) Erfinder: Löffler, Christian, 47608 Geldern (DE)

(56) Entgegenhaltungen:
- EP-A- 0 666 367
- DE-A1- 19 856 517
- DE-C- 488 962
- GB-A- 263 750
- US-A- 2 785 021

## Beschreibung

Die Erfindung betrifft eine als Kalander ausgebildete Walzenanordnung.

Eine derartige Walzenanordnung wird beispielsweise durch einen Kompaktkalander gebildet, bei dem die Walze mit einem Gegendruckelement, beispielsweise einer Gegenwalze oder dem umlaufenden Mantel einer Schuhwalze, zusammenwirkt. Die Walze oder das Gegendruckelement ist hierbei in der Regel mit Mitteln versehen, die eine Druckspannung in dem Nip zwischen der Walze und dem Gegendruckelement erzeugen. Die Kräfte, mit denen die Walze belastet ist, müssen vom Ständer aufgenommen werden. Hierzu dient der Zuganker, wie er beispielsweise aus DE 295 20 194 U1 bekannt ist. Dort wirkt der Zuganker auf das Walzenlager, d.h. der Zuganker verspannt das Walzenlager mit dem Ständer. Zum Ausbau der Walze wird der Zuganker vom Walzenlager gelöst und das Walzenlager kann dann mit der Walze vom Ständer abgehoben werden.

In GB 263 750 ist eine aus mehreren Walzen bestehende Walzenanordnung offenbart, wobei die Walzen in einem Ständer angeordnet sind. Ein schwenkbarer Zuganker verhindert ein Aufbiegen des Ständers bei einer Druckbeaufschlagung der Walzen. An dem Zuganker sind nicht näher bezeichnete statische Elemente, wie z.B. ein Leitblech, angeordnet. Diese statischen Elemente werden bei einer Bewegung des Zugankers aus dem Bereich verlagert, der zum Ausbau oder Einbau einer Walze erforderlich ist.

EP 0 666 367 A1 zeigt eine Verbindungskonstruktion für Walzen, die einen Breitnipkalander bilden, und ein Verfahren, um diese Breitnipwalzen miteinander zu verbinden. Die Lagergehäuse, die die beiden Walzen aufnehmen, sind über Zuganker miteinander verbunden. Durch ein Ausschwenken der beiden Zuganker ist ein Trennen der Walzen möglich. Zum Ausschwenken der Zuganker sind Zylinder vorgesehen, deren Kolbenstangen mit den Zugankern verbunden sind.

Aus DE 488 962 C ist ein Kalander zur Verarbeitung von Gummi oder ähnlichem Material bekannt. In einem Ständer sind mehrere Walzen gelagert. Zur Entlastung des Ständers sind als Klappdeckel bezeichnete Zuganker vorgesehen. An den Zugankern sind keine Zusatzaggregate angeordnet.

In vielen Kalandern gibt es Zusatzaggregate vor der Walze oder vor dem Nip, der durch die Walze begrenzt ist. Bei diesen Zusatzaggregaten handelt es sich beispielsweise um Breitstreckwalzen, Befeuchtungseinrichtungen, Einführhilfen, Abschlagmesser oder andere Teile. Da sich diese Zusatzaggregate in der Regel über die gesamte axiale Länge der Walze erstrecken müssen, behindern sie den Ausbau. Man muß sie vor dem Ausbau abmontieren und auf die Seite schaffen, damit ein Weg frei wird, durch den die Walze aus dem Ständer heraustransportiert werden kann.

Der Erfindung liegt die Aufgabe zugrunde, den Ein- und Ausbau der Walze zu vereinfachen.

Diese Aufgabe wird durch eine Walzenanordnung mit den Merkmalen des Anspruchs 1 gelöst.

Mit dieser Ausgestaltung nutzt man die Tatsache aus, daß die Zuganker vor dem Ausbau der Walze ohnehin zumindest einseitig gelöst und dann wegbewegt werden müssen. Mit Hilfe der Bewegung der Zugankers läßt sich dann das mindestens eine Zusatzaggregat, das mit den Zugankern verbunden ist, aus dem Bereich herausbewegen, der zum Ausbau oder zum Einbau der Walze erforderlich ist. Eine getrennte Handhabung des Zusatzaggregates ist nicht erforderlich. Das Zusatzaggregat kann nach wie vor an den Zugankern befestigt bleiben, so daß es nach dem Einbau der Walze und dem Festlegen der Zuganker wieder in der richtigen Position steht, ohne daß aufwendige Einstellarbeiten vorzunehmen wären.

Vorteilhafterweise ist der Zuganker mit einem Ende schwenkbar am Ständer befestigt. Die Ausrichtung des Zugankers zum Ständer bleibt dann in gewisser Hinsicht erhalten. Das Wegbewegen der Zuganker erfolgt in einer Schwenkbewegung. Auch das Zusatzaggregat wird dann weggeschwenkt. Auch wenn das mindestens eine Zusatzaggregat ein gewisses Gewicht aufweist, bereitet der Transport am Zuganker keine Schwierigkeiten, weil der Zuganker schwenkbar am Ständer gelagert ist. Die Gewichtskräfte des Zusatzaggregats können also weitgehend durch die Schwenklagerung aufgenommen werden. Die Kräfte, die zum Verlagern des Zusatzaggregates gemeinsam mit den Zugankern erforderlich sind, sind in der Regel vergleichsweise klein.

Vorzugsweise sind mindestens zwei Walzen im Ständer angeordnet und der Zuganker ist so am Ständer befestigt, daß sich ein geschlossener Kraftfluß durch den Ständer und den Zuganker um die Walzen herum ergibt. Die Zuganker greifen also am Ständer an und verhindern somit, daß sich der Ständer verbiegt oder aufspreizt, wenn die Walzen einen Druck gegeneinander ausüben. Die Kräfte werden also durch die Kombination aus Zuganker und Ständer beidseitig einer Ebene aufgenommen, in der die Achsen der Walzen liegen. Dies erlaubt es einerseits, mit relativ großen Kräften zu fahren und andererseits verhindert es eine Veränderung der Geometrie des Ständers, die sich unter Umständen ungünstig auf die Geometrie des Nips zwischen den Walzen auswirken könnte.

Bevorzugterweise weist der Ständer eine zur Vertikalen geneigte Oberseite auf, im wesentlichen parallel zu der eine durch die Achsen der Walzen bestimmte Ebene angeordnet ist, und der Zuganker ist an der Oberseite angeordnet. Der Ständer kann also beispielsweise nach Art eines rechtwinkligen Dreiecks ausgebildet sein, das mit einer Kathete auf dem Fußboden aufsteht, wobei die Hypotenuse die Oberseite bildet. Diese Ausbildung hat den Vorteil, daß der Zuganker beim Spannen auf der Oberseite aufliegen kann, was die Festlegung des Zugankers am Ständer ganz erheblich erleichtert.

Hierbei ist besonders bevorzugt, daß der Zuganker am unteren Ende mit dem Ständer schwenkbar verbunden ist. In diesem Fall ist zur Verschwenkung des Zugankers nur eine relativ geringe Kraft erforderlich und zwar auch dann, wenn das oder die Zusatzaggregate ein gewisses Gewicht haben. Aus der geneigten Position heraus kann der Zuganker in die Vertikale geschwenkt werden. In der Vertikalen wird aber das Gewicht des Zugankers und des oder der Zusatzaggregate praktisch vollkommen von der Schwenklagerung aufgenommen.

Bevorzugterweise ist der Zuganker in eine Winkelstellung verschwenkbar, in der eine Ausbauöffnung für die Walze aus dem Ständer freigegeben ist. Diese Schwenkbewegung ist etwas größer als die Schwenkbewegung, die erforderlich ist, um die Verspannung eines Walzenlagers vom Ständer freizugeben. Wenn der Zuganker in ausreichendem Maße verschwenkbar ist, dann wird der Ausbau der Walze sehr einfach und zwar vor allem bei einem Ständer, der eine zur Vertikalen geneigte Oberfläche aufweist. In diesem Fall muß die Walze, die etwa senkrecht zur Oberfläche ausgebaut werden soll, beim Anheben etwas seitlich bewegt werden. Lediglich für die Seitwärtsbewegung muß ein ausreichender Raum vom Zuganker freigegeben worden sein.

Hierbei ist bevorzugt, daß der Zuganker um mindestens 30° verschwenkbar ist. Dies ist zwar ein vergleichsweise großer Winkel. Er ist aber insbesondere bei einem Ständer mit geneigter Oberfläche ohne weiteres beherrschbar. Wenn beispielsweise die Oberseite des Ständers um 45° zur Vertikalen geneigt ist, dann reicht es in der Regel aus, den Zuganker ebenfalls um 45° gegenüber dem Ständer zu verschwenken, um die Ausbauöffnung der Walze freigeben zu können.

Bevorzugterweise weist der Zuganker einen winklig abstehenden Schenkel auf, dessen Ende mit dem Ständer schwenkbar verbunden ist. Diese Ausgestaltung hat Vorteile, weil man den Schwenkpunkt des Zugankers gegenüber dem Ständer relativ frei wählen kann. Man kann den Zuganker dann beispielsweise so verschwenken, daß er nach der Schwenkbewegung eine Position seitlich vor dem Ständer einnimmt, so daß ein vergleichsweise großer Raum zur Verfügung gestellt werden kann, der zum Aus- und Einbau der Walze genutzt werden kann.

Bevorzugterweise weist der Zuganker eine Öffnung auf, in die ein Vorsprung des Ständers eingreift, wenn das andere Ende des Zugankers am Ständer festgelegt ist, wobei zwischen dem Vorsprung und einer Begrenzungswand der Öffnung eine auf Druck belastbare Verbindung geschaffen ist. Mit dieser Ausgestaltung entkoppelt man die Schwenklagerung des Zugankers am Ständer von einer Befestigung, die Zugkräfte aufnehmen muß. Die letzte Funktion wird nun von der Kombination aus Öffnung und Vorsprung übernommen. Die Schwenklagerung oder eine andere Befestigungsmöglichkeit muß hierbei lediglich so ausgelegt sein, daß der Zuganker nicht über den Vorsprung hinweggezogen werden kann. Die hierfür erforderlichen Kräfte sind aber vergleichsweise klein.

Hierbei ist besonders bevorzugt, daß die Öffnung schlitzartig und der Vorsprung länglich ausgebildet sind. Dies erleichtert es, den Vorsprung mit einer ausreichenden Höhe auszubilden und dennoch die Schwenkbewegung des Zugankers gegenüber dem Ständer nicht zu behindern.

Vorzugsweise weist der Zuganker am Ständer eine Zusatzbefestigung auf. Diese Zusatzbefestigung kann beispielsweise dadurch gebildet sein, daß Schrauben oder Bolzen durch den Zuganker hindurch in den Ständer geschraubt werden. Diese Zusatzbefestigung ist nicht unbedingt darauf ausgelegt, größere Zugkräfte aufzunehmen. Sie verhindert aber, daß der gespannte Zuganker gegenüber dem Ständer schwingt. Dies wirkt sich insbesondere auf das mindestens eine Zusatzaggregat positiv aus. Man verhindert nämlich mit der Zusatzbefestigung, daß das Zusatzaggregat im Betrieb stärker gegenüber dem Ständer schwingt.

Hierbei ist bevorzugt, daß mindestens ein Zusatzaggregat im Bereich der Zusatzbefestigung angeordnet ist. In diesem Fall werden Schwingungen des Zusatzaggregates, die durch eine Schwingung des Zugankers bedingt sind, praktisch vollständig eliminiert.

Vorzugsweise ist mindestens eine Walze in einem Lagergehäuse gelagert, das in einer Ausnehmung des Ständers angeordnet und mit Hilfe von Druckelementen mit dem Ständer verspannt ist. Dies ist eine relativ einfache Möglichkeit, die Walze im Ständer zu fixieren und trotzdem einen Ein- und Ausbau der Walze mit geringem Aufwand zu ermöglichen. Vor dem Ausbau der Walze müssen lediglich die Druckelemente entlastet werden. Nach dem Einbau werden die Druckelemente wieder mit Druck beaufschlagt. Eine Druckquelle steht in den meisten Walzenanordnungen ohnehin zur Verfügung.

Die Erfindung wird im folgenden anhand von bevorzugten Ausführungsbeispielen in Verbindung mit der Zeichnung näher beschrieben. Hierin zeigen:
- Fig. 1: eine schematische Seitenansicht einer Walzenanordnung und
- Fig. 2: eine Vorderansicht auf einen Zuganker.

Eine Walzenanordnung 1, im vorliegenden Fall ein Kompaktkalander, weist eine obere Walze 2 und eine untere Walze 3 auf. Die obere Walze 2 weist ein Lagergehäuse 4 auf. Die untere Walze 3 weist ein Lagergehäuse 5 auf. Dargestellt ist lediglich eine einzelne Seite der Walzenanordnung 1. Es liegt auf der Hand, daß die gegenüberliegende Seite der Walzenanordnung entsprechend ausgebildet ist.

Die Lagergehäuse 4, 5 sind in einem Ständer 6 angeordnet, der eine erste Ausnehmung 7 für das erste Lagergehäuse 4 der oberen Walze 2 und eine zweite Ausnehmung 8 für das Lagergehäuse 5 der unteren Walze 3 aufweist. Die Ausnehmungen 7, 8 sind zu einer Oberseite 9 des Ständers 6 hin offen, die mit der Vertikalen einen Winkel von etwa 45° einschließt. Etwa parallel zu der Oberseite 9 ist eine Ebene 10 angeordnet, in der die Achsen 11 der oberen Walze 2 und 12 der unteren Walze 3 angeordnet sind.

Zwischen den beiden Walzen 2, 3 ist ein Nip 13 ausgebildet, durch den eine nicht näher dargestellte Warenbahn, beispielsweise eine Papierbahn, geführt werden kann, um dort mit Druck und gegebenenfalls auch erhöhter Druck beaufschlagt zu werden. Zur Druckbeaufschlagung weist die obere Walze 2 schematisch dargestellte Druckelemente 14 auf, die in Axialrichtung verteilt über die Länge der oberen Walze 2 angeordnet sind.

Der Ständer 6 ist E-förmig ausgestaltet, d.h. er weist einen oberen Schenkel 15, einen mittleren Schenkel 16 und einen unteren Schenkel 17 auf, wobei der mittlere Schenkel 16 gegenüber den beiden anderen Schenkeln 15, 17 verkürzt ist. Die Schenkel 15, 16 begrenzen die Ausnehmung 7 und die Schenkel 16, 17 begrenzen die Ausnehmung 8.

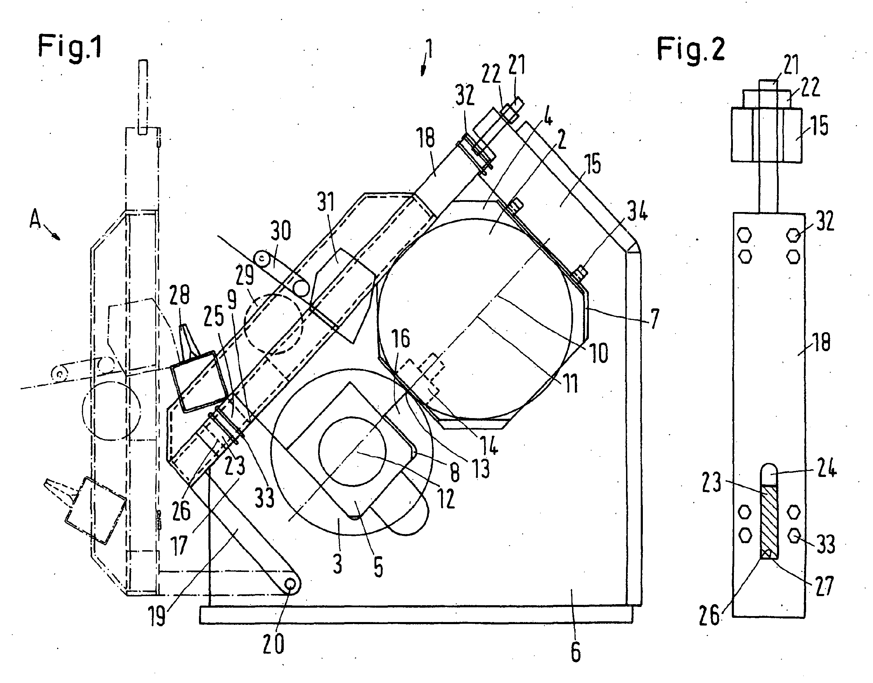

Wenn nun die Druckelemente 14 in Betrieb gesetzt werden, bestünde die Gefahr, daß sich die Schenkel 15, 17 auseinanderspreizen. Um dies zu verhindern, ist ein Zuganker 18 vorgesehen. Der Zuganker 18 ist L-förmig ausgebildet. Er weist an seinem unteren Ende einen Schenkel 19 auf, der über ein Schwenklager 20 am Ständer 6 schwenkbar befestigt ist. Der Zuganker 18 kann also aus der mit durchgezogenen Linien dargestellten Position in eine Position verschwenkt werden, die strichpunktiert in Fig. 1 dargestellt ist.

Der Zuganker 18 weist an seinem oberen Ende einen Gewindeabschnitt 21 auf, auf den eine Mutter 22 aufgeschraubt ist, die am oberen Schenkel 15 des Ständers 6 anliegt.

Der Ständer 6 weist am unteren Schenkel 17 einen aus der Oberseite 9 herausragenden Vorsprung 23 auf, der in einen Schlitz 24 im Zuganker 18 eingreift, wenn sich der Zuganker 18 in der in Fig. 1 mit durchgezogenen Linien dargestellten Spannposition befindet. Der Vorsprung 23 weist eine abgerundete Oberseite 25 und eine vertikal zur Oberseite 9 des Ständers 6 verlaufende rückwärtige Flanke 26 auf, an der eine Kante 27 des Schlitzes 24 zur Anlage kommt, wenn die Mutter 22 angezogen wird. Die Zugkräfte, die der Zuganker 18 aufbringt, werden also über die auf die Flanke 26 wirkende Kante 27 und die auf den oberen Schenkel 15 des Ständers 6 wirkende Mutter 22 aufgebracht.

Dadurch, daß das Schwenklager 20 an dem Schenkel 19 des Zugankers 18 angeordnet ist, ist es möglich, nach dem Lösen der Mutter 22 den Zuganker 18 in die in Fig. 1 strichpunktiert dargestellte Position zu verschwenken, also so weit, daß die Ausnehmungen 7, 8 vollständig freigegeben sind. Damit ist gemeint, daß die Walzen 2, 3 mit ihren Lagergehäusen 4, 5 problemlos aus dem Ständer 6 herausbewegt und dann abtransportiert werden können.

Am Zuganker 18 sind eine Reihe von Zusatzaggregaten befestigt und zwar (bezogen auf die Darstellung der Fig. 1 von links nach rechts) ein Abschlagmesser 28, eine Breitstreckwalze 29, eine Einfädelhilfe 30, beispielsweise in Form eines "Fibron"-Bandes, und eine Feuchtigkeitsauftragseinrichtung 31, beispielsweise in Form eines Dampfblaskastens oder eines Dampfsprührohrs.

Diese Zusatzaggregate werden verlagert, wenn der Zuganker 18 verschwenkt wird. Mit dem Verschwenken des Zugankers 18 werden also diese Zusatzaggregate aus dem Weg geschafft und geben den Raum frei, der für den Ausbau der Walzen 2, 3 erforderlich ist, ohne daß hierzu getrennte Handhabungen erforderlich sind. In entsprechender Weise werden die Zusatzaggregate 28-31 wieder in die richtige Position verlagert, wenn der Zuganker 18 mit dem Ständer 6 verspannt wird.

Der Zuganker 18 ist durch eine Zusatzbefestigung mit dem Ständer 6 verbunden. Die Zusatzbefestigung wird gebildet durch eine erste Gruppe von Schrauben oder Bolzen 32, die am oberen Ende des Ständers 6 den Zuganker 18 mit dem Schenkel 15 verbinden, und durch eine zweite Gruppe von Schrauben oder Bolzen 33, die am unteren Ende des Ständers 6 den Zuganker 18 mit dem unteren Schenkel 17 verbinden.

Die Schrauben 32, 33 legen den Zuganker 18 zusätzlich auf der Oberseite 9 des Ständers 6 fest. Sie dienen allerdings nicht in erster Linie dazu, weitere Zugkräfte aufzunehmen. Sie dienen vor allem dazu, eine Schwingungsneigung des Zugankers 18 zu unterdrücken. Der Zuganker 18 bildet vor allem in gespanntem Zustand ein schwingungsfähiges Gebilde, das durch äußere oder innere Anregungen zu Schwingungen angeregt werden kann, beispielsweise durch Unwuchten der Walzen 2, 3. Diese Schwingungen könnten sich unter Umständen negativ auf die Zusatzaggregate 28-31 auswirken. Durch die Schrauben 32, 33 wird eine derartige Schwingung verhindert oder zumindest stark gedämpft. Dies gilt insbesondere für ein Zusatzaggregat 28, das im Bereich der Schrauben 33 angeordnet ist. Dort schwingt der Zuganker 18 praktisch gar nicht.

Zwischen dem Lagergehäuse 4 der oberen Walze 2 und dem oberen Schenkel 15 des Ständers 6 sind Druckelemente 34 angeordnet, die das Lagergehäuse 4 gegenüber dem Ständer 6 verspannen. Wenn die Druckelemente 34, die beispielsweise hydraulisch oder pneumatisch betätigt sein können, unter Druck gesetzt werden, dann ist das Lagergehäuse 4 im Ständer 6 festgelegt. Umgekehrt läßt sich das Lagergehäuse 4 aus dem Ständer 6 ohne weiteres entnehmen, wenn die Druckelemente 34 gelöst worden sind.

Als zusätzliche Sicherheitsmaßnahme ist vorgesehen, daß der Zuganker 18 das Lagergehäuse 4 im Ständer 6 verriegelt, d.h. in der in Fig. 1 mit durchgezogenen Linien dargestellten Position des Zugankers 18 liegt der Zuganker 18 auf der Oberseite (parallele Seite zur Oberseite 9 des Ständers 6) des Lagergehäuses 4 an und verhindert somit, daß sich das Lagergehäuse 4 aus dem Ständer 6 herausbewegen kann.

Anstelle des dargestellten einteiligen Zugankers 18 ist es natürlich auch möglich, einen zwei- oder mehrteiligen Zuganker zu verwenden, der beispielsweise zusätzlich am mittleren Schenkel 16 des Ständers 6 festgelegt werden kann. In diesem Falle könnte es sinnvoll sein, den mittleren Schenkel 16 bis zur Oberseite 9 des Ständers 6 zu verlängern.

Der Zuganker 18 gewährleistet einen geschlossenen Kraftfluß um die Walzen 2, 3 herum. Er vermeidet eine Aufspreizung der Schenkel 15, 17 des Ständers 6, sichert das Lagergehäuse 4 der oberen Walze 2 und trägt die Zusatzaggregate 28-31.

Da der Zuganker 18 um seine untere Befestigung 20 am Ständer 6 verschwenkbar ist, müssen zur Verlagerung der Zusatzaggregate 28-31 nur relativ geringe Kräfte aufgebracht werden. Die Zusatzaggregate 28-31 müssen im Prinzip nur geringfügig angehoben werden, bis sie bei der Schwenkbewegung des Zugankers 18 den Scheitelpunkt ihrer Kreisbewegung überschreiten. In der in Fig. 1 strichpunktiert dargestellten Position kann der Zuganker 18 einfach abgestellt werden, beispielsweise auf dem Fußboden oder auf einem nicht näher dargestellten Anschlags.

## Patentansprüche

1. Als Kalander ausgebildete Walzenanordnung (1) mit mindestens zwei Walzen (2, 3), einem Ständer (6), in dem die Walzen (2, 3) gelagert sind, und jeweils einem Zuganker (18) an beiden Seiten der Walzenanordnung (1), die am Ständer (6) befestigt sind, wobei an den Zugankern (18) mindestens ein sich über die axiale Länge der Walze (2, 3) erstreckendes Zusatzaggregat (28-31) befestigt ist, das durch eine Bewegung der Zuganker (18) aus einem Bereich heraus verlagerbar ist, der zum Ausbau oder Einbau der Walze erforderlich ist.

2. Anordnung nach Anspruch 1, **dadurch gekennzeichnet, daß** der Zuganker mit einem Ende schwenkbar am Ständer befestigt ist.

3. Anordnung nach Anspruch 1 oder 2, **dadurch gekennzeichnet, daß** der Zuganker (18) so am Ständer (6) befestigt ist, daß sich ein geschlossener Kraftfluß durch den Ständer (6) und den Zuganker (18) um die Walzen (2, 3) herum ergibt.

4. Anordnung nach Anspruch 3, **dadurch gekennzeichnet, daß** der Ständer eine zur Vertikalen geneigte Oberseite (9) aufweist, im wesentlichen parallel zu der eine durch die Achsen (11, 12) der Walzen (2, 3) bestimmte Ebene (10) angeordnet ist, und der Zuganker (18) an der Oberseite (9) angeordnet ist.

5. Anordnung nach einem der Ansprüche 1 bis 4, **dadurch gekennzeichnet, daß** der Zuganker (18) am unteren Ende mit dem Ständer (6) schwenkbar verbunden ist.

6. Anordnung nach einem der Ansprüche 1 bis 5, **dadurch gekennzeichnet, daß** der Zuganker (18) in eine Winkelstellung verschwenkbar ist, in der eine Ausbauöffnung für die Walze (2, 3) aus dem Ständer (6) freigegeben ist.

7. Anordnung nach Anspruch 6, **dadurch gekennzeichnet, daß** der Zuganker (18) um mindestens 30° verschwenkbar ist.

8. Anordnung nach einem der Ansprüche 1 bis 7, **dadurch gekennzeichnet, daß** der Zuganker (18) einen winklig abstehenden Schenkel (19) aufweist, dessen Ende mit dem Ständer (6) schwenkbar verbunden ist.

9. Anordnung nach einem der Ansprüche 1 bis 8, **dadurch gekennzeichnet, daß** der Zuganker (18) eine Öffnung (24) aufweist, in die ein Vorsprung (23) des Ständers (6) eingreift, wenn das andere Ende des Zugankers (18) am Ständer (6) festgelegt ist, wobei zwischen dem Vorsprung (23) und einer Begrenzungswand (27) der Öffnung (24) eine auf Druck belastbare Verbindung (26, 27) geschaffen ist.

10. Anordnung nach Anspruch 9, **dadurch gekennzeichnet, daß** die Öffnung (24) schlitzartig und der Vorsprung (23) länglich ausgebildet sind.

11. Anordnung nach einem der Ansprüche 8 bis 10, **dadurch gekennzeichnet, daß** der Zuganker (18) am Ständer (6) eine Zusatzbefestigung (32, 33) aufweist.

12. Anordnung nach Anspruch 11, **dadurch gekennzeichnet, daß** mindestens ein Zusatzaggregat (28) im Bereich der Zusatzbefestigung (33) angeordnet ist.

13. Anordnung nach einem der Ansprüche 1 bis 12, **dadurch gekennzeichnet, daß** mindestens eine Walze (2, 3) in einem Lagergehäuse (4, 5) gelagert ist, das in einer Ausnehmung (7, 8) des Ständers (6) angeordnet und mit Hilfe von Druckelementen (34) mit dem Ständer (6) verspannt ist.

## Claims

1. Roll arrangement constructed as a calender (1) having at least two rolls (2, 3), a stand (6), in which the rolls (2, 3) are mounted, and in each case a tie-rod (18) on both sides of the roll arrangement (1), which are fixed to the stand (6), at least one additional unit (28-31) extending over the axial length of the roll (2, 3) being fixed to the tie-rods (18), and, by means of a movement of the tie-rod (18), being capable of being displaced out of a region which is required to install or remove the roll.

2. Arrangement according to Claim 1, **characterized in that** the tie-rod is fixed to the stand by one end such that it can pivot.

3. Arrangement according to Claim 1 or 2, **characterized in that** the tie-rod (18) is fixed to the stand (6) in such a way that the result is a closed flow of force around the rolls (2, 3) through the stand (6) and the tie-rods (18).

4. Arrangement according to Claim 3, **characterized in that** the stand has an upper side (9) inclined with respect to the vertical, substantially parallel to which a plane (10) determined by the axes (11, 12) of the rolls (2, 3) is arranged, and the tie-rod (18) is arranged on the upper side (9).

5. Arrangement according to one of Claims 1 to 4, **characterized in that** the tie-rod (18) is connected to the stand (6) by the lower end such that it can pivot.

6. Arrangement according to one of Claims 1 to 5, **characterized in that** the tie rod (18) can be pivoted into an angular position in which a removal opening for the roll (2, 3) from the stand (6) is exposed.

7. Arrangement according to Claim 6, **characterized in that** the tie-rod (18) can be pivoted through at least 30°.

8. Arrangement according to one of Claims 1 to 7, **characterized in that** the tie-rod (18) has a limb (19) projecting at an angle, the end of which is connected to the stand (6) such that it can pivot.

9. Arrangement according to one of Claims 1 to 8, **characterized in that** the tie-rod (18) has an opening (24) in which a protrusion (23) of the stand (6) engages when the other end of the tie-rod (18) is fixed to the stand (6), a connection (26, 27) that can be loaded in compression being created between the protrusion (23) and a boundary wall (27) of the opening (24).

10. Arrangement according to Claim 9, **characterized in that** the opening (24) is slot-like and the protrusion (23) is elongated.

11. Arrangement according to one of Claims 8 to 10, **characterized in that** the tie rod (18) on the stand (6) has an additional fixing (32, 33).

12. Arrangement according to Claim 11, **characterized in that** at least one additional unit (28) is arranged in the region of the additional fixing (33).

13. Arrangement according to one of Claims 1 to 12, **characterized in that** at least one roll (2, 3) is mounted in a bearing housing (4, 5) which is arranged in a cut-out (7, 8) in the stand (6) and is loaded with the stand (6) with the aid of pressure elements (34).

## Revendications

1. Arrangement de rouleaux (1) en forme de calandre comportant au moins deux rouleaux (2, 3), une cage (6) dans laquelle les rouleaux (2, 3) sont montés, et chaque fois un tirant d'ancrage (18) sur les deux côtés de l'arrangement de rouleaux (1), qui sont fixés à la cage (6), dans lequel au moins un ensemble supplémentaire (28-31) s'étendant sur la longueur axiale des rouleaux (2, 3) est fixé aux tirants d'ancrage (18) et est déplaçable par un mouvement des tirants d'ancrage (18) hors d'une zone qui est nécessaire pour le démontage ou le montage des rouleaux.

2. Arrangement selon la revendication 1, **caractérisé en ce que** le tirant d'ancrage est fixé de manière pivotante par une extrémité à la cage.

3. Arrangement selon la revendication 1 ou 2, **caractérisé en ce que** le tirant d'ancrage (18) est fixé à la cage (6) de telle manière qu'un flux de force fermé à travers la cage (6) et le tirant d'ancrage (18) entoure les rouleaux (2, 3).

4. Arrangement selon la revendication 3, **caractérisé en ce que** la cage comprend un côté supérieur (9) incliné par rapport à la verticale, auquel un plan (10) défini par les axes (11, 12) des rouleaux (2, 3) est sensiblement parallèle, et le tirant d'ancrage (18) est disposé sur le côté supérieur (9).

5. Arrangement selon l'une quelconque des revendications 1 à 4, **caractérisé en ce que** le tirant d'ancrage (18) est relié de façon pivotante par une extrémité à la cage (6).

6. Arrangement selon l'une quelconque des revendications 1 à 5, **caractérisé en ce que** le tirant d'ancrage (18) peut pivoter dans une position angulaire dans laquelle une ouverture de démontage du rouleau (2, 3) hors de la cage (6) est libérée.

7. Arrangement selon la revendication 6, **caractérisé en ce que** le tirant d'ancrage (18) peut pivoter d'au moins 30°.

8. Arrangement selon l'une quelconque des revendications 1 à 7, **caractérisé en ce que** le tirant d'ancrage (18) comporte un bras saillant en angle (19), dont l'extrémité est reliée de manière pivotante à la cage (6).

9. Arrangement selon l'une quelconque des revendications 1 à 8, **caractérisé en ce que** le tirant d'ancrage (18) présente une ouverture (24), dans laquelle s'engage une saillie (23) de la cage (6), lorsque l'autre extrémité du tirant d'ancrage (18) est fixée à la cage (6), une liaison pouvant être sollicitée en pression (26, 27) étant ainsi créée entre la saillie (23) et une paroi de limitation (27) de l'ouverture (24).

10. Arrangement selon la revendication 9, **caractérisé en ce que** l'ouverture (24) est en forme de fente et la saillie (23) est allongée.

11. Arrangement selon l'une quelconque des revendications 8 à 10, **caractérisé en ce que** le tirant d'ancrage (18) présente une fixation supplémentaire (32, 33) sur la cage (6).

12. Arrangement selon la revendication 11, **caractérisé en ce qu'**au moins un ensemble supplémentaire (28) est disposé dans la région de la fixation supplémentaire (33).

13. Arrangement selon l'une quelconque des revendications 1 à 12, **caractérisé en ce qu'**au moins un rouleau (2, 3) est monté dans un boîtier de palier (4, 5), qui est disposé dans un évidement (7, 8) de la cage (6) et est serré dans la cage (6) à l'aide d'éléments de pression (34).
